(19) Europäisches Patentamt
European Patent Office
Office européen des brevets

(11) **EP 3 701 416 B1**

(12) **FASCICULE DE BREVET EUROPEEN**

(45) Date de publication et mention
de la délivrance du brevet:
**04.08.2021 Bulletin 2021/31**

(21) Numéro de dépôt: **18799681.4**

(22) Date de dépôt: **23.10.2018**

(51) Int Cl.:
*G06K 9/00* *(2006.01)*    *B60W 30/14* *(2006.01)*
*B60W 40/06* *(2012.01)*    *G01C 21/00* *(2006.01)*
*G01C 21/12* *(2006.01)*

(86) Numéro de dépôt international:
**PCT/EP2018/078988**

(87) Numéro de publication internationale:
**WO 2019/081481 (02.05.2019 Gazette 2019/18)**

(54) **ASSISTANCE À LA CONDUITE D'UN VÉHICULE AUTOMOBILE À L'APPROCHE D'UN RALENTISSEUR DE VITESSE**

UNTERSTÜTZUNG DES FAHRENS EINES KRAFTFAHRZEUGES BEI ANNÄHERUNG AN EINE BREMSSCHWELLE

ASSISTING THE DRIVING OF AN AUTOMOTIVE VEHICLE WHEN APPROACHING A SPEED BREAKER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.10.2017 FR 1760031**

(43) Date de publication de la demande:
**02.09.2020 Bulletin 2020/36**

(73) Titulaire: **Valeo Schalter und Sensoren GmbH
74321 Bietigheim-Bissingen (DE)**

(72) Inventeurs:
• **GARNAULT, Alexandre
San Mateo
California 94403 (US)**

• **HEITZMANN, Thomas
93012 Bobigny (FR)**

(74) Mandataire: **Claassen, Maarten Pieter
Valeo Schalter und Sensoren GmbH
CDA-IP
Laiernstraße 12
74321 Bietigheim-Bissingen (DE)**

(56) Documents cités:
**EP-A1- 2 886 410        WO-A1-2013/124320
DE-A1-102011 007 608    DE-A1-102015 206 473
KR-A- 20160 050 736     US-A1- 2009 164 063**

EP 3 701 416 B1

## Description

La présente invention concerne de manière générale les véhicules automobiles, et plus précisément un procédé et un système d'assistance à la conduite d'un véhicule automobile à l'approche d'un ralentisseur de vitesse.

De nombreux systèmes d'assistance à la conduite sont aujourd'hui proposés dans le but d'améliorer les conditions de sécurité de circulation.

Parmi les fonctionnalités possibles, on peut citer notamment la régulation de vitesse ou ACC (initiales anglo-saxonnes mises pour Adaptive Cruise Control), l'arrêt et le redémarrage automatique du moteur du véhicule en fonction des conditions de trafic et/ou des signalisations (feux, stop, céder le passage...), l'assistance au maintien automatique de la trajectoire du véhicule dans sa voie de roulage comme proposée par les systèmes connus sous la terminologie anglo-saxonne de « Lane Keeping Assistance Systems, l'avertissement au conducteur de sortie de voie ou de franchissement involontaire de lignes (« Lane Departure Warning » en terminologie anglo-saxonne), l'assistance au changement de voie ou LCC (initiales anglo-saxonnes mises pour Lane Change Control), etc.

Les systèmes d'assistance à la conduite ont ainsi pour fonction générale d'alerter le conducteur d'une situation requérant sa vigilance et/ou de définir la trajectoire que doit suivre le véhicule pour arriver à une destination donnée, et permettre par suite de contrôler les organes de contrôle de la direction et de freinage du véhicule, pour que cette trajectoire soit effectivement suivie automatiquement. La trajectoire doit être comprise ici dans sa définition mathématique, c'est-à-dire comme étant l'ensemble des positions successives qui doivent être occupées par le véhicule au cours du temps. Ainsi, les systèmes d'assistance à la conduite doivent définir non seulement le chemin à emprunter, mais aussi le profil de vitesses à respecter. Pour ce faire, ils utilisent de nombreuses informations sur l'environnement immédiat du véhicule (présence d'obstacles tels que des piétons, de cycles ou autres véhicules motorisés, détection de panneaux de signalisation, configuration routière...), en provenance d'un ou plusieurs moyens de détection tels que caméras, radars, lidars, équipant le véhicule, ainsi que des informations liées au véhicule lui-même, telles que sa vitesse, son accélération, sa position donnée par exemple par un système de navigation type GPS.

On s'intéresse par la suite aux situations particulières dans lequel un véhicule automobile est à l'approche d'un ralentisseur de vitesse situé sur la route empruntée par le véhicule automobile, et doit donc anticiper suffisamment la présence de ce ralentisseur de vitesse pour calculer dynamiquement la distance l'en séparant, et déclencher si nécessaire une procédure de décélération permettant au véhicule de passer sur le ralentisseur à une vitesse adéquate.

WO 2013/124320 A1 divulgue un procédé d'assistance à la conduite d'un véhicule automobile comportant une étape de détection et de suivi d'au moins un véhicule tiers mobile devant le véhicule automobile, une étape d'établissement d'un profil temporel de la distance estimée séparant ledit véhicule automobile dudit au moins un véhicule tiers mobile détecté et suivi et une étape de détection d'une zone d'anomalie dans ledit profil temporel.

Pour un véhicule à automatisation conditionnelle ou complète (dit de niveau 3 ou supérieur selon la classification donnée par le Comité SAE, Acronyme anglo-saxon mis pour Society of Automotive Engineers), il est prévu d'équiper le véhicule d'une carte géographique haute définition qui est censé donner une localisation précise des ralentisseurs présents sur la route empruntée. Néanmoins, un problème majeur concerne la capacité du véhicule à se localiser le plus précisément possible sur cette carte. En effet, en l'absence d'une auto localisation précise, le véhicule ne sait pas estimer avec suffisamment de précision la distance qui le sépare d'un ralentisseur. Certaines méthodes ont été développées pour réaligner correctement la position d'un véhicule sur une carte géographique embarquée, en utilisant la détection de repères statiques situés sur la route à l'aide de différents capteurs embarqués, et en corrélant les repères détectés avec les repères présents sur la carte géographique. Pour pouvoir appliquer ces méthodes au cas du ralentisseur de vitesse, il serait nécessaire de pouvoir détecter, depuis le véhicule automobile, la présence de ce ralentisseur. Une possibilité consiste à détecter la présence d'un panneau de signalisation dédié, situé sur le bord de la route et annonçant la présence de ce ralentisseur. Néanmoins, la détection par traitement d'images issues d'une caméra embarquée sur le véhicule reste difficile à réaliser, particulièrement la nuit, et/ou lorsque les panneaux de signalisation sont cachés par des obstacles tels qu'un camion ou autre situés sur la route.

Les véhicules automobiles à conduite assistée dits de niveau 2 ne disposent quant à eux d'aucune carte géographique haute définition embarquée.

Ainsi, dans tous les cas, il existe un besoin de pouvoir estimer, à partir d'images capturées par une caméra embarquée sur un véhicule automobile, la présence d'un ralentisseur de vitesse vers lequel le véhicule se dirige, même en cas d'obstruction de panneaux signalant la présence de ce ralentisseur, de façon à dériver dynamiquement une mesure fiable de la distance séparant le véhicule de ce ralentisseur.

La présente invention a pour but de répondre à ce besoin en proposant un procédé et un système d'assistance à la conduite pour un véhicule automobile à l'approche d'un ralentisseur de vitesse, utilisant la détection de véhicules tiers faite à partir d'images capturées par une caméra embarquée pour déduire la présence du ralentisseur de vitesse et estimer la distance l'en séparant.

Pour ce faire, l'invention a pour objet un procédé d'assistance à la conduite d'un véhicule automobile à l'approche d'un ralentisseur de vitesse, comportant :

- une étape de détection et de suivi d'au moins un véhicule tiers mobile devant le véhicule automobile à partir d'un traitement d'images capturées par une caméra embarquée sur ledit véhicule automobile;

- une étape d'établissement d'un profil temporel de la distance estimée séparant ledit véhicule automobile dudit au moins un véhicule tiers mobile détecté et suivi ;

- une étape de détection d'une zone d'anomalie dans ledit profil temporel; et

- une étape d'estimation d'une distance $d_{bump}$ séparant ledit véhicule automobile d'un ralentisseur de vitesse à partir d'une distance séparant le véhicule automobile dudit au moins un véhicule tiers estimée à un instant $t_{bump}$ distinct des instants correspondant à la zone d'anomalie détectée.

Outre les caractéristiques principales qui viennent d'être mentionnées, le procédé selon l'invention peut comporter une ou plusieurs caractéristiques complémentaires parmi les suivantes:

- la distance $d_{bump}$ est de préférence estimée selon la relation

$$d_{bump} = D(t_{bump}) - d_{parc}$$

dans laquelle $D(t_{bump})$ est la distance séparant le véhicule automobile dudit au moins un véhicule tiers estimée audit instant $t_{bump}$, et $d_{parc}$ correspond à la distance parcourue par le véhicule automobile depuis ledit instant $t_{bump}$.

- l'étape de détection et de suivi peut comprendre la détection et le suivi d'au moins un véhicule tiers circulant dans le même sens que ledit véhicule automobile ; l'instant $t_{bump}$ est choisi alors de préférence antérieur à un instant correspondant au début de la zone d'anomalie détectée;

- l'étape de détection et de suivi peut comprendre la détection et le suivi d'au moins un véhicule tiers circulant en sens inverse par rapport audit véhicule automobile ; l'instant $t_{bump}$ est choisi alors de préférence postérieur à un instant correspondant à la fin de la zone d'anomalie détectée ;

- le procédé peut comporter en outre une étape de correction d'une position dudit véhicule automobile par rapport à une carte géographique haute définition embarquée dans ledit véhicule automobile à partir d'une position d'un repère correspondant audit ralentisseur de vitesse préenregistrée dans ladite carte, et de la distance $d_{bump}$ estimée ;

- avantageusement, le procédé peut comporter en outre une étape d'estimation d'un mouvement en élévation dudit véhicule automobile, et ladite distance $d_{bump}$ n'est estimée que si aucun mouvement en élévation, supérieur à un seuil prédéfini et concomitant avec un instant correspondant à la zone d'anomalie détectée, n'est estimé ;

- un mouvement en élévation dudit véhicule automobile est par exemple estimé à partir d'un capteur inertiel embarqué sur ledit véhicule automobile ;

- en variante, un mouvement en élévation dudit véhicule automobile est estimé à partir d'une analyse de flots optiques sur une pluralité de portions d'images successives capturées par ladite caméra embarquée.

L'invention a également pour objet un système d'assistance à la conduite d'un véhicule automobile à l'approche d'un ralentisseur de vitesse, comportant un module de traitement embarqué apte à implémenter les étapes du procédé précédent.

L'invention sera mieux comprise à la lecture de la description détaillée qui suit, faite en référence aux figures annexées, dans lesquelles :

- la figure 1 illustre schématiquement le principe de l'invention à partir de vues de dessus (a) à (d) correspondant à quatre instants successifs d'une situation d'approche d'un véhicule automobile vers un ralentisseur de vitesse ;
- la figure 2 représente un profil temporel de distances estimées séparant le véhicule automobile d'un autre véhicule tiers détecté dans la situation illustrée sur la figure 1 ;
- la figure 3 représente une séquence d'étapes susceptibles d'être implémentées dans un système d'assistance à la conduite conforme à l'invention.

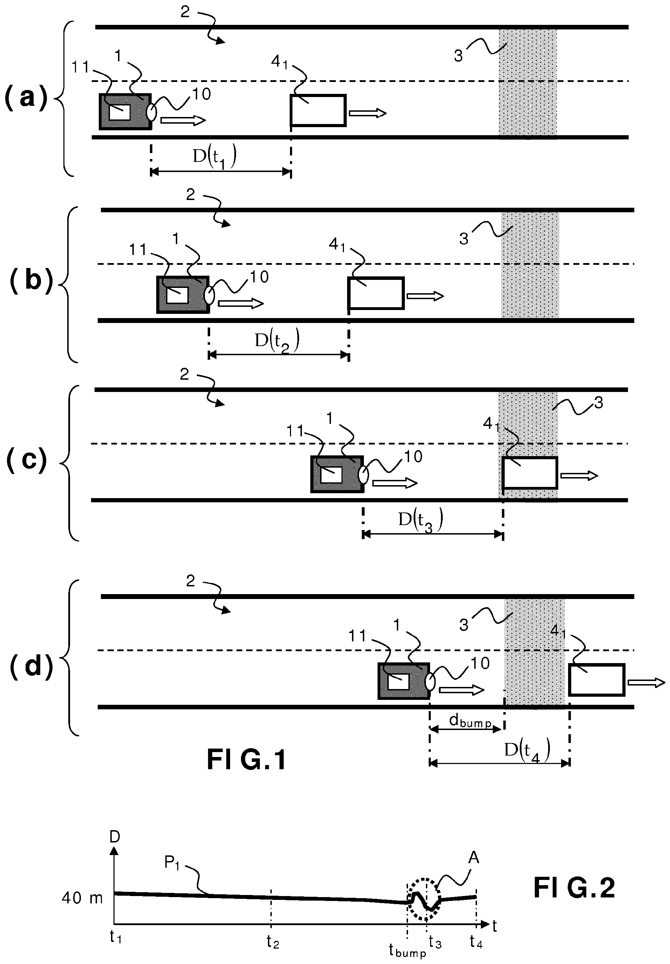

Dans la suite et en référence à la figure 1, on suppose, à titre d'exemple non limitatif, qu'un véhicule automobile 1 se déplace sur une route 2, et approche d'un ralentisseur 3 de vitesse situé sur la route 2. Dans la situation routière représentée, un autre véhicule $4_1$, appelé dans la suite véhicule tiers, se déplace sur la route 2 au-devant du véhicule automobile 1, dans l'exemple dans le même sens que le véhicule automobile 1. Dans les vues (a) et (b) de la figure 1 correspondant à deux instants successifs $t_1$ et $t_2$, les deux véhicules 1 et $4_1$ sont situés en amont du ralentisseur 3 de vitesse. Dans la vue suivante (c) correspondant à un instant $t_3$, le véhicule tiers $4_1$ est en train de rouler sur le ralentisseur 3. Enfin, la vue (d) correspond à un instant $t_4$ auquel le véhicule tiers $4_1$ a déjà passé le ralentisseur 3 de vitesse, alors que le véhicule automobile 1 est toujours en amont de ce ralentisseur.

Le principe de l'invention repose sur le fait qu'il est possible pour le véhicule automobile 1, comme cela va être à présent expliqué, de déduire la présence du ralentisseur 3 de vitesse et d'estimer dynamiquement la distance $D_{BUMP}$ l'en séparant à partir de la détection du véhicule tiers $4_1$, faite par un traitement d'images.

Pour ce faire, le véhicule automobile 1 est équipé d'une caméra 10 de paramètres de calibration connus et apte à capter des images successives de paysages. La caméra 10 est de préférence localisée à un endroit du véhicule qui correspond le mieux à ce que le conducteur voit, par exemple centrée au niveau du pare-brise à l'intérieur de l'habitacle. Le véhicule automobile 1 comporte en outre un module de traitement 11 formant, avec la caméra 10, un système permettant de détecter notamment la présence, au-devant du véhicule automobile 1, des autres véhicules, tels que le véhicule tiers mobile $4_1$. Ainsi, la caméra frontale 10 capture les images de la scène routière située à l'avant du véhicule 1 et fournit ces images au module 11 de traitement d'images du système.

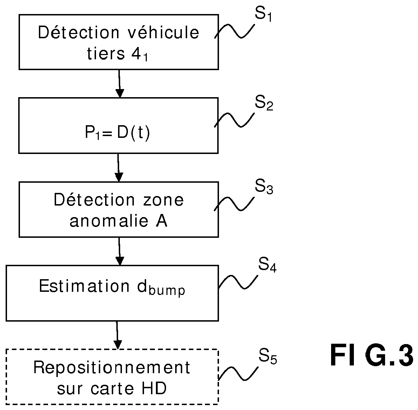

Pour la situation routière illustrée sur la figure 1, le module 11 de traitement d'images va pouvoir réaliser, lors d'une étape référencée $S_1$ sur la figure 3, la détection et le suivi du véhicule tiers mobile $4_1$.

On rappelle à cet effet que tout véhicule tiers détecté par traitement d'images délivré par une seule caméra est délivré généralement sous la forme d'une boîte englobante qui délimite une zone d'image représentative du véhicule détecté. Cette boîte englobante présente une forme générale rectangulaire avec notamment une frontière horizontale inférieure ou limite inférieure, et une frontière horizontale supérieure ou limite supérieure. Une position 3D de l'obstacle détecté est alors estimée, généralement en utilisant la limite inférieure de la boîte englobante correspondante. L'estimation repose classiquement sur l'hypothèse dite du monde plan, selon laquelle les véhicules détectés n'évoluent que sur un seul plan horizontal, et utilisent les paramètres de calibration intrinsèques (focale, taille des pixels) et extrinsèques (angle de visée par rapport à l'horizontale) de la caméra 10 pour estimer la distance D séparant le véhicule automobile 1 d'un véhicule détecté à partir de la position verticale de la limite inférieure de la boîte englobante associée.

Le module 11 va pouvoir alors classiquement établir (étape $S_2$ sur la figure 3), pour chaque véhicule tiers détecté et suivi (en l'occurrence le véhicule tiers $4_1$ pour la situation routière de la figure 1), un profil temporel de la distance D séparant le véhicule automobile 1 du véhicule tiers. Sur la figure 1, on note ainsi $D(t_1)$ la distance séparant les deux véhicules 1 et $4_1$ dans la vue (a), $D(t_2)$ la distance séparant les deux véhicules 1 et $4_1$ dans la vue (b), $D(t_3)$ la distance séparant les deux véhicules 1 et $4_1$ dans la vue (c) et $D(t_4)$ la distance séparant les deux véhicules 1 et $4_1$ dans la vue (b).

Un exemple de profil temporel $P_1$ des distances séparant le véhicule automobile 1 du véhicule tiers détecté $4_1$ dans la configuration routière spécifique de la figure 1 est représenté sur la figure 2.

On constate que le profil $P_1$ comporte une partie dans laquelle la distance est sensiblement constante, traduisant le fait que le véhicule automobile 1 et le véhicule tiers détecté $4_1$ circulent dans le même sens, sensiblement à la même vitesse. Le profil $P_1$ comporte en outre une zone d'anomalie A autour de l'instant $t_3$ auquel le véhicule tiers $4_1$ roule sur le ralentisseur 3 de vitesse. Cette anomalie est liée à l'hypothèse du monde plan utilisée dans l'estimation de la distance séparant le véhicule automobile 1 du véhicule tiers détecté $4_1$. En effet, entre le moment où le véhicule tiers $4_1$ s'engage sur le ralentisseur 3 de vitesse et le moment où le véhicule tiers $4_1$ quitte ce ralentisseur 3, il se produit des différences en élévation du véhicule tiers $4_1$ qui ne sont pas prises en compte dans l'estimation classique de la distance séparant ce véhicule tiers $4_1$ du véhicule automobile 1.

Cette anomalie se traduit par une croissance rapide de la distance estimée, suivie d'une décroissance rapide.

Conformément à l'invention, le module 11 va détecter (étape $S_3$ sur la figure 3) la zone d'anomalie A dans le profil temporel.

Pour ce faire, le module 11 peut mémoriser les distances estimées pour le véhicule tiers $4_1$ sur une fenêtre glissante, par exemple de l'ordre de 10 secondes, puis calculer des opérateurs statistiques sur la fenêtre glissante, tels que la moyenne et variance, qui vont augmenter puis décroître dans un temps très court correspondant à la zone d'anomalie A.

En variante, la zone d'anomalie A peut être détectée avec une approche de type apprentissage machine en appliquant un algorithme de type SVM (initiales anglo-saxonnes mises pour Support Vector Machine) utilisant une base d'apprentissage dans laquelle des exemples de signatures propres aux zones d'anomalie sont cumulées.

Dans un mode de réalisation préféré, on s'assure dans le même temps qu'une zone d'anomalie détectée correspond bien à un mouvement en élévation lié au véhicule tiers $4_1$ et non à un mouvement en élévation lié au véhicule automobile 1. Pour ce faire, on prévoit avantageusement que le module 11 implémente une étape (non représentée) d'estimation d'un mouvement en élévation du véhicule automobile 1, et que ladite distance $d_{bump}$ ne soit estimée que si aucun mouvement en élévation, supérieur à un seuil prédéfini et concomitant avec l'instant correspondant à la zone d'anomalie A détectée, n'est estimé.

Le mouvement en élévation du véhicule automobile 1 peut par exemple être estimé à partir d'un capteur inertiel embarqué sur le véhicule automobile 1. En variante, le mouvement en élévation du véhicule automobile 1 est estimé à partir d'une analyse de flots optiques sur une pluralité de portions d'images successives capturées par la caméra 10 embarquée. Dans ce dernier cas, on considère que c'est le véhicule automobile 1 qui subit un mouvement en élévation lorsque les différents flots optiques analysés présentent les mêmes variations.

Une fois que la zone d'anomalie A a été détectée, il est alors possible pour le véhicule automobile 1, d'une part, de conclure à la présence ralentisseur 3 et d'autre part, d'estimer (étape $S_4$ sur la figure 4) dynamiquement la distance $d_{bump}$ séparant le véhicule automobile 1 de ce ralentisseur 3 de vitesse en utilisant une distance séparant le véhicule automobile 1 du véhicule tiers $4_1$ estimée à un instant $t_{bump}$ distinct des instants correspondant à la zone d'anomalie détectée.

Une estimation de la distance $d_{bump}$ séparant le véhicule automobile 1 du ralentisseur 3 de vitesse peut en particulier être calculée par la relation suivante :

$$d_{bump} = D(t_{bump}) - d_{parc}$$

dans laquelle :

$D(t_{bump})$ est la distance séparant le véhicule automobile 1 du véhicule tiers $4_1$ telle qu'estimée à l'instant $t_{bump}$, et

$d_{parc}$ correspond à la distance parcourue par le véhicule automobile 1 depuis ledit instant $t_{bump}$.

Le calcul de la distance parcourue est rendu possible en sauvegardant dans la fenêtre glissante de 10 secondes l'état du véhicule 1 (en particulier sa vitesse longitudinale et sa vitesse de lacet), ou en sauvegardant les données du totalisateur kilométrique du véhicule automobile 1.

Dans le cas de la situation routière de la figure 1, pour laquelle les véhicules 1 et $4_1$ circulent dans le même sens, l' instant $t_{bump}$ est choisi de préférence antérieur à un instant correspondant au début de la zone d'anomalie A détectée (voir figure 2).

L'invention est néanmoins applicable également si le véhicule tiers détecté roule en sens inverse du véhicule automobile 1. Dans ce cas, l'instant $t_{bump}$ est choisi de préférence postérieur à un instant correspondant à la fin de la zone d'anomalie A détectée.

Le procédé et le système selon l'invention permettent ainsi de détecter la présence d'un ralentisseur de vitesse et d'estimer la distance séparant le véhicule automobile en se servant uniquement de la détection des véhicules tiers présents sur la route, ce qui permet de s'affranchir des problèmes liés aux conditions de non visibilité d'un panneau de signalisation censé annoncé ce ralentisseur.

Si le véhicule automobile 1 est en outre un véhicule à automatisation conditionnelle ou complète, le procédé peut comporter avantageusement une étape $S_5$ de correction d'une position du véhicule automobile 1 par rapport à une carte géographique HD embarquée dans le véhicule automobile 1 à partir d'une position d'un repère correspondant audit ralentisseur 3 de vitesse préenregistrée dans ladite carte, et de la distance $d_{bump}$ estimée.

**Revendications**

1.    Procédé d'assistance à la conduite d'un véhicule automobile (1) à l'approche d'un ralentisseur de vitesse, comportant:

- une étape ($S_1$) de détection et de suivi d'au moins un véhicule tiers ($4_1$) mobile devant le véhicule automobile (1) à partir d'un traitement d'images capturées par une caméra (10) embarquée sur ledit véhicule automobile (1) ;
- une étape ($S_2$) d'établissement d'un profil temporel de la distance estimée séparant ledit véhicule automobile (1) dudit au moins un véhicule tiers ($4_1$) mobile détecté et suivi ;
- une étape ($S_3$) de détection d'une zone d'anomalie (A) dans ledit profil temporel; et
- une étape ($S_4$) d'estimation d'une distance $d_{bump}$ séparant ledit véhicule automobile (1) d'un ralentisseur (3) de vitesse à partir d'une distance séparant le véhicule automobile (1) dudit au moins un véhicule tiers ($4_1$) estimée à un instant $t_{bump}$ distinct des instants correspondant à la zone d'anomalie détectée.

2.    Procédé selon la revendication 1, **caractérisé en ce que** la distance $d_{bump}$ est estimée selon la relation

$$d_{bump} = D(t_{bump}) - d_{parc}$$

dans laquelle $D(t_{bump})$ est la distance séparant le véhicule automobile (1) dudit au moins un véhicule tiers ($4_1$) estimée audit instant $t_{bump}$, et $d_{parc}$ correspond à la distance parcourue par le véhicule automobile (1) depuis ledit instant $t_{bump}$.

3.    Procédé selon la revendication 2, dans lequel l'étape ($S_1$) de détection et de suivi comprend la détection et le suivi d'au moins un véhicule tiers circulant dans le même sens que ledit véhicule automobile (1), et en ce que ledit instant $t_{bump}$ est choisi antérieur à un instant correspondant au début de la zone d'anomalie détectée.

4.    Procédé selon la revendication 2, dans lequel l'étape ($S_1$) de détection et de suivi comprend la détection et le suivi d'au moins un véhicule tiers circulant en sens inverse par rapport audit véhicule automobile (1), et en ce que ledit instant $t_{bump}$ est choisi postérieur à un instant correspondant à la fin de la zone d'anomalie détectée.

**5.** Procédé selon l'une quelconque des revendications précédentes, **caractérisé en ce qu'**il comporte en outre une étape ($S_5$) de correction d'une position dudit véhicule automobile (1) par rapport à une carte géographique haute définition embarquée dans ledit véhicule automobile (1) à partir d'une position d'un repère correspondant audit ralentisseur (3) de vitesse préenregistrée dans ladite carte, et de la distance $d_{bump}$ estimée.

**6.** Procédé selon l'une quelconque des revendications précédentes, **caractérisé en ce qu'**il comporte en outre une étape d'estimation d'un mouvement en élévation dudit véhicule automobile (1), et **en ce que** ladite distance $d_{bump}$ n'est estimée que si aucun mouvement en élévation, supérieur à un seuil prédéfini et concomitant avec un instant correspondant à la zone d'anomalie détectée, n'est estimé.

**7.** Procédé selon la revendication 5, **caractérisé en ce qu'**un mouvement en élévation dudit véhicule automobile (1) est estimé à partir d'un capteur inertiel embarqué sur ledit véhicule automobile (1).

**8.** Procédé selon la revendication 5, **caractérisé en ce qu'**un mouvement en élévation dudit véhicule automobile est estimé à partir d'une analyse de flots optiques sur une pluralité de portions d'images successives capturées par ladite caméra (10) embarquée.

**9.** Système d'assistance à la conduite d'un véhicule automobile (1) à l'approche d'un ralentisseur (3) de vitesse, comportant un module (11) de traitement embarqué apte à implémenter les étapes du procédé selon l'une quelconques des revendications 1 à 7.


**Patentansprüche**

**1.** Fahrassistenzverfahren eines Kraftfahrzeugs (1) bei Annäherung an eine Bremsschwelle, das aufweist:

- einen Schritt ($S_1$) der Erfassung und Verfolgung mindestens eines sich vor dem Kraftfahrzeug (1) bewegenden Drittfahrzeugs ($4_1$) ausgehend von einer Verarbeitung von von einer an Bord des Kraftfahrzeugs (1) befindlichen Kamera (10) aufgenommenen Bildern;
- einen Schritt ($S_2$) der Erstellung eines Zeitprofils des das Kraftfahrzeug (1) vom mindestens einen erfassten und verfolgten beweglichen Drittfahrzeug ($4_1$) trennenden geschätzten Abstands;
- einen Schritt ($S_3$) der Erfassung eines Anomaliebereichs (A) im Zeitprofil; und
- einen Schritt (S4) der Schätzung eines das Kraftfahrzeug (1) von einer Bremsschwelle (3) trennenden Abstands $d_{bump}$ ausgehend von einem das Kraftfahrzeug (1) vom mindestens einen Drittfahrzeug ($4_1$) trennenden Abstand geschätzt in einem Zeitpunkt $t_{bump}$ anders als die dem erfassten Anomaliebereich entsprechenden Zeitpunkte.

**2.** Verfahren nach Anspruch 1, **dadurch gekennzeichnet, dass** der Abstand $d_{bump}$ gemäß der folgenden Beziehung geschätzt wird:

$$d_{bump} = D(t_{bump}) - d_{parc}$$

wobei $D(t_{bump})$ der das Kraftfahrzeug (1) vom mindestens einen Drittfahrzeug ($4_1$) trennende Abstand geschätzt im Zeitpunkt $t_{bump}$ ist, und $d_{parc}$ der vom Kraftfahrzeug (1) seit dem Zeitpunkt $t_{bump}$ zurückgelegten Strecke entspricht.

**3.** Verfahren nach Anspruch 2, wobei der Schritt ($S_1$) der Erfassung und Verfolgung die Erfassung und die Verfolgung mindestens eines Drittfahrzeugs enthält, das in der gleichen Richtung fährt wie das Kraftfahrzeug (1), und der Zeitpunkt $t_{bump}$ vor einem Zeitpunkt gewählt wird, der dem Beginn des erfassten Anomaliebereichs entspricht.

**4.** Verfahren nach Anspruch 2, wobei der Schritt ($S_1$) der Erfassung und Verfolgung die Erfassung und die Verfolgung mindestens eines Drittfahrzeugs enthält, das in Gegenrichtung zum Kraftfahrzeug (1) fährt, und der Zeitpunkt $t_{bump}$ nach einem Zeitpunkt gewählt wird, der dem Ende des erfassten Anomaliebereichs entspricht.

**5.** Verfahren nach einem der vorhergehenden Ansprüche, **dadurch gekennzeichnet, dass** es außerdem einen Schritt ($S_5$) der Korrektur einer Position des Kraftfahrzeugs (1) bezüglich einer hochauflösenden Landkarte an Bord des Kraftfahrzeugs (1) ausgehend von einer vorab in der Karte registrierten Position einer der Bremsschwelle (3) entsprechenden Markierung und vom geschätzten Abstand $d_{bump}$ aufweist.

**6.** Verfahren nach einem der vorhergehenden Ansprüche, **dadurch gekennzeichnet, dass** es außerdem einen Schritt der Schätzung einer Höhenbewegung des Kraftfahrzeugs (1) enthält, und dass der Abstand $d_{bump}$ nur geschätzt wird, wenn keine Höhenbewegung höher als eine vordefinierte Schwelle und in Zusammenhang mit einem Zeitpunkt entsprechend dem erfassten Anomaliebereich geschätzt wird.

**7.** Verfahren nach Anspruch 5, **dadurch gekennzeichnet, dass** eine Höhenbewegung des Kraftfahrzeugs (1) ausgehend von einem an Bord des Kraftfahrzeugs (1) befindlichen Trägheitssensor geschätzt wird.

8. Verfahren nach Anspruch 5, **dadurch gekennzeichnet, dass** eine Höhenbewegung des Kraftfahrzeugs ausgehend von einer Analyse optischer Flüsse in einer Vielzahl aufeinanderfolgender Bildabschnitte geschätzt wird, die von der an Bord befindlichen Kamera (10) aufgenommen wurden.

9. Fahrassistenzsystem eines Kraftfahrzeugs (1) bei Annäherung an eine Bremsschwelle (3), das ein an Bord befindliches Verarbeitungsmodul (11) aufweist, das die Schritte des Verfahrens nach einem der Ansprüche 1 bis 7 ausführen kann.

**Claims**

1. Driving assistance method for a motor vehicle (1) when approaching a speed bump, comprising:

   - a step ($S_1$) of detecting and tracking at least one other moving vehicle ($4_1$) in front of the motor vehicle (1) based on processing images captured by a camera (10) on board said motor vehicle (1);
   - a step ($S_2$) of establishing a temporal profile of the estimated distance between said motor vehicle (1) and said at least one detected and followed other moving vehicle ($4_1$) ;
   - a step ($S_3$) of detecting an anomaly area (A) in said temporal profile; and
   - a step ($S_4$) of estimating a distance $d_{bump}$ between said motor vehicle (1) and a speed bump (3) on the basis of a distance between the motor vehicle (1) and said at least one other vehicle ($4_1$), estimated at a time $t_{bump}$ separate from the times corresponding to the detected anomaly area.

2. Method according to Claim 1, **characterized in that** the distance $d_{bump}$ is estimated using the relationship

$$d_{bump} = D(t_{bump}) - d_{parc}$$

   wherein $D(t_{bump})$ is the distance between the motor vehicle (1) and said at least one other vehicle ($4_1$) estimated at said time $t_{bump}$, and $d_{parc}$ corresponds to the distance covered by the motor vehicle (1) starting from said time $t_{bump}$ .

3. Method according to Claim 2, wherein the detection and tracking step ($S_1$) comprises detecting and tracking at least one other vehicle traveling in the same direction as said motor vehicle (1), and in that said time $t_{bump}$ is chosen before a time corresponding to the start of the detected anomaly area.

4. Method according to Claim 2, wherein the detection and tracking step ($S_1$) comprises detecting and tracking at least one other vehicle traveling in the opposite direction to said motor vehicle (1), and in that said time $t_{bump}$ is chosen after a time corresponding to the end of the detected anomaly area.

5. Method according to any one of the preceding claims, **characterized in that** it furthermore comprises a step ($S_5$) of correcting a position of said motor vehicle (1) with respect to a high-definition geographical map on board said motor vehicle (1) on the basis of a position of a marker corresponding to said speed bump (3) and prerecorded in said map, and of the estimated distance $d_{bump}$.

6. Method according to any one of the preceding claims, **characterized in that** it furthermore comprises a step of estimating an elevational movement of said motor vehicle (1), and **in that** said distance $d_{bump}$ is estimated only if no elevational movement greater than a predefined threshold and concomitant with a time corresponding to the detected anomaly area is estimated.

7. Method according to Claim 5, **characterized in that** an elevational movement of said motor vehicle (1) is estimated on the basis of an inertial sensor on board said motor vehicle (1).

8. Method according to Claim 5, **characterized in that** an elevational movement of said motor vehicle is estimated on the basis of analyzing optical flows over a plurality of successive image portions captured by said on-board camera (10).

9. Driving assistance system for a motor vehicle (1) when approaching a speed bump (3), comprising an on-board processing module (11) able to implement the steps of the method according to any one of Claims 1 to 7.

**FIG.1**

**FIG.2**

FIG.3

**EP 3 701 416 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013124320 A1